**Europäisches Patentamt**

**European Patent Office**

**Office européen des brevets**

(19)

(11) Veröffentlichungsnummer: **0 048 939**
**B1**

(12) # EUROPÄISCHE PATENTSCHRIFT

(45) Veröffentlichungstag der Patentschrift:
10.07.85

(51) Int. Cl.⁴: **H 04 Q 9/00**

(21) Anmeldenummer: 81107534.0

(22) Anmeldetag: 22.09.81

(54) Signalübertragungseinrichtung mit Stationen, die mit Eingabeeinrichtungen wahlweise bestückbar sind.

(30) Priorität: 30.09.80 DE 3036923

(43) Veröffentlichungstag der Anmeldung:
07.04.82 Patentblatt 82/14

(45) Bekanntmachung des Hinweises auf die Patenterteilung:
10.07.85 Patentblatt 85/28

(84) Benannte Vertragsstaaten:
AT BE CH FR GB IT LI NL SE

(56) Entgegenhaltungen:
DE - A - 2 715 213
DE - A - 2 853 147

(73) Patentinhaber: Siemens Aktiengesellschaft, Berlin und München Wittelsbacherplatz 2, D-8000 München 2 (DE)

(72) Erfinder: Krings, Gert, Dipl.-Ing., Linienstrasse 75, D-8024 Deisenhofen (DE)

**Beschreibung**

Die Erfindung bezieht sich auf eine Signalübertragungseinrichtung, bei der wenigstens eine Zentralstation und weitere Stationen, die mit Eingabeeinrichtungen wahlweise bestückbar sind, an einen gemeinsamen Signalübertragungsweg anschließbar sind, wobei die Eingabeeinrichtungen durch die Zentralstation einzeln aufrufbar sind und nach Aufruf durch die Zentralstation oder durch einen Anreiz gesteuert Signale aussenden und in der Aufruffolge Zeitabschnitte freigehalten sind, in die die Stationen im Anreizbetrieb von sich aus einspringen können, wobei in den Stationen jeweils wenigstens einer Gruppe von Eingabeeinrichtungen eine gemeinsame, mittels einer Zeitsteuereinrichtung feststellbare Einspringberechtigungszeit zugeteilt ist, und die Zeitsteuereinrichtung im Falle wenigstens eines in der betreffenden Station vorliegenden Anreizes jeweils zum Zeitpunkt der Einspringberechtigungszeit eine Ablaufsteuereinrichtung zu einer zeitlich aufeinanderfolgenden Abfrage der in der betreffenden Station enthaltenen Eingabeeinrichtungen veranlaßt.

Eine derartige Station ist bereits aus der DE-OS 2 715 213 bekannt.

Die Signalübertragungseinrichtung kann dabei insbesondere eine Überwachungseinrichtung sein, mit deren Hilfe Störungsmeldungen von mehreren Orten an eine Zentralstation übermittelt und dort zur Anzeige gebracht werden. In diesem Fall sind die Eingabeeinrichtungen durch Meldungs-Eingabeeinrichtungen gebildet und die Zentralstation kann die Eingabeeinrichtungen in einer insbesondere zyklischen Aufruffolge aufrufen und so zur Meldungsgabe auffordern.

Der Signalübertragungsweg ist vorzugsweise eine sogenannte Omnibusleitung bzw. eine Leitung, an die die Stationen nach Art einer Konferenzschaltung angeschlossen sind, wobei jeweils eine Station sendet und die anderen Stationen empfangen. Die zu übertragenden Signale sind insbesondere Meldungen und/oder Befehle in einer Einrichtung zur Überwachung und/oder Fernsteuerung und können gegebenenfalls von einer Station zu einer anderen übermittelt werden.

Ein Anreiz zum Aussenden eines Impulstelegrammes ohne besonderen Aufruf durch die Zentralstation kann vor allem bei Meldungen besonderer Dringlichkeit, bei neu aufgetretenen oder bei beendeten Meldungen gebildet werden.

Man kann bei einer Signalübertragungseinrichtung der vorstehend näher bezeichneten Art in der Aufruffolge Zeitspannen für anreizgesteuerte Sendungen bzw. einen sogenannten Anreizzyklus freihalten und eine zeitliche Folge dieser anreizgesteuerten Sendungen dadurch sicherstellen, daß den einzelnen Gruppen von Eingabeeinrichtungen Zeitsteuereinrichtungen zugeordnet sind, die von Gruppe zu Gruppe zeitlich gestaffelte Sendeerlaubniskriterien erzeugen.

Man kann dabei die zur Übermittlung der Signale an die Zentralstation benötigte Zeit dadurch relativ klein halten, daß man die den Gruppen von Eingabeeinrichtungen zugeordneten Staffelzeitpunkte für die Sendeberechtigung so schnell aufeinanderfolgen läßt, daß der Zeitraum zwischen zwei aufeinanderfolgenden Staffelzeitpunkten gerade noch ausreicht, um in einer Station festzustellen, ob die zu dem vorangegangenen Staffelzeitpunkt sendeberechtigte Gruppe von ihrer Sendeberechtigung Gebrauch gemacht hat. Wird eine Sendung auf der Leitung festgestellt, so kann mit der eigenen Sendung bis nach dem Abschluß des Sendevorganges der vorangegangenen Gruppe abgewartet und die Staffelzeitfolge dann fortgesetzt werden.

Eine Station macht von ihrer Sendeberechtigung Gebrauch, sobald sie bei derzeitlich aufeinanderfolgenden Abfrage der Eingabeeinrichtungen eine solche mit einem Anreiz vorfindet.

Läßt man bei der wahlweisen Bestückung der Station mit Eingabeeinrichtungen alle Adressen der Signalübertragungseinrichtung zu und verwendet je nach Bestückung und Adressierung nur einen Teil davon, so kann, wenn z. B. nur in der Eingabeeinrichtung in der Abfragefolge an letzter Stelle stehenden Station ein Anreiz vorliegt, eine relativ lange Zeit vergehen, bis die Aussendung eines Telegrammes erfolgt. Erlaubt man andererseits für jede Station nur eine Auswahl aus einer kleineren Zahl von Adressen, so läßt sich der Adressenvorrat bei Teilbestückung nicht vollständig ausnutzen.

Aus der DE-A-2 853 147 ist bereits eine Datenein- und -ausgabeanordnung bekannt, bei der Ein- und Ausgabesignalformer von einer Steuereinheit durch Ausgabe von Adressen ansteuerbar sind und nach Ansteuerung ein Rückmeldesignal ausgeben. Bei dieser Anordnung ist vorgesehen, daß zur Inbetriebnahme die für die Steuerung einer vorgegebenen Anzahl von Signalformern bemessene Steuereinheit eine der vorgegebenen Signalformerzahl entsprechende Anzahl von Adressensignalen ausgibt und daß beim Betrieb nur solche Adressensignale, auf deren Aussenden die Steuereinheit ein Rückmeldesignal empfangen hat, ausgesandt werden.

Bei einer Ausführungsform sind verschiedene Arten von Signalformern vorhanden, in denen jeweils deren Art codiert gespeichert ist. Dabei wird mit dem Rückmeldesignal das Signal für die Signalformerart zur Steuereinheit übertragen.

Zur Inbetriebnahme der Station ruft die Steuereinheit nacheinander alle Signalformer und gleichzeitig die Zellen eines Speichers mit denselben Adressen auf. Ist ein aufgerufener Signalformer nicht vorhanden, erhält die Steuereinheit kein Rückmeldesignal, und der Inhalt einer Zelle eines Signalformerspeichers wird gelöscht bzw. bleibt unverändert. Nach Aufruf eines vorhandenen Signalformers wird nach Eingang des Rückmeldesignals eine Zelle des Signalformerspeichers markiert. Die gespeicherten Adressen der Signalformer werden in der Weise gebildet, daß in einem Informationsbearbeitungsspeicher angegeben ist, welche Signalformer in einem 5-Sekunden-Zyklus, welche im 10-Sekunden-Zyklus und welche als Gruppe aufgerufen werden sollen. Nach Eintrag der Signalformerbestückung in den Signalformerspeicher wird festgestellt, welche der tatsächlich vorhandenen Signalformer im 5-Sekunden-Zyklus, im 10-Sekunden-Zyklus und als Gruppe aufgerufen werden sollen. Die jeweils ermittelte Adresse wird dann in einen von mehreren Speichern eingetragen.

Bei der bekannten Anordnung handelt es sich um eine Signalübertragungseinrichtung, bei der die jeweils aufgerufene Station die in ihr enthaltenen Signalformer abfragt. Dabei ist weder ein direkter Aufruf von Signalformern durch die Zentralstation noch eine Übermittlung von Meldungen im Anreizbetrieb vorgesehen.

Aufgabe der Erfindung ist es, eine Signalübertragungseinrichtung für Aufruf- und Anreizbetrieb, deren Stationen jeweils mit einer wählbaren Zahl von Eingabeeinrichtungen bestückbar sind, derart auszubilden, daß sich bei Freizügigkeit der Adressierung eine besonders große Geschwindigkeit ergibt, mit der die Stationen bei Anreizbetrieb mit der Aussendung eines Telegrammes auf die Sendebefugnis reagieren.

Gemäß der Erfindung wird die Signalübertragungseinrichtung zur Lösung dieser Aufgabe derart ausgebildet, daß der Ablaufsteuereinrichtung eine Adressenabfrageeinrichtung mit einem Adressengeber für alle in der Signalübertragungseinrichtung vorgesehenen Adressen zugeordnet ist und daß mittels der Adressenabfrageeinrichtung die Eingabeeinrichtungen derart abfragbar sind, daß als Abfrageergebnis die Adressen der in der betreffenden Station vorhandenen Eingabeeinrichtungen in einen Adressenspeicher einschreibbar sind und daß bei einer anreizbedingten Sendung der betreffenden Station die im Adressenspeicher gespeicherten Adressen ausgelesen und nur diese Adressen zur Abfrage der Eingabeeinrichtungen herangezogen werden.

Durch diese Maßnahmen ergibt sich der Vorteil, daß bei der Bestückung der Station mit Eingabeeinrichtungen keinerlei Beschränkungen bei der Adressenwahl bestehen und daß sich dabei eine wesentlich beschleunigte Adressenabfrage während des Anreizzyklus ergibt. Ein weiterer Vorteil besteht darin, daß sich für teilbestückte Stationen eine weitere Verkürzung der Sendezeit im Anreizbetrieb ergibt. Da die Stationen im Anreizbetrieb besonders schnell auf eine Sendeerlaubnis reagieren, sind die Lücken zwischen den einzelnen Telegrammen besonders klein. Die Wartezeit, innerhalb derer die anderen Stationen vom Zeitpunkt der Einspringberechtigungszeit der betrachteten Station mit eigenen Sendungen warten, ist besonders klein, so daß die Folge anreizbedingter Sendungen verschiedener Stationen weiter zeitlich verkürzt wird. Besondere Maßnahmen für einen schnellen Suchlauf sind dabei nicht erforderlich.

In weiterer Ausgestaltung der Erfindung wird die Signalübertragungseinrichtung derart ausgebildet, daß mittels der Adressenabfrageeinrichtung in zeitlicher Folge eine wiederholte Abfrage der Eingabeeinrichtungen vornehmbar ist, derart, daß in den Arbeitsspeicher jeweils das letzte Abfrageergebnis einspeicherbar ist. Zweckmäßigerweise werden hierbei die Zeiten verwendet, in denen der an der Aktualisierung der Adressen beteiligte Teil der Station nicht für das Aussenden oder Empfangen von Informationen benötigt wird.

Durch diese Maßnahmen ergibt sich der Vorteil, daß Änderungen der Bestückung einer Station selbsttätig erfaßt werden, ohne daß hierzu besondere Maßnahmen ergriffen werden müssen.

Die Erfindung wird anhand der in den Figuren dargestellten Ausführungsbeispiele näher erläutert.

Die Figuren zeigen jeweils eine Station, bei der im Anreizbetrieb nur die tatsächlich vorhandenen Eingabeeinrichtungen gezielt aufgerufen werden, und zwar

Fig. 1 eine Station mit einem an eine Steuereinrichtung angeschlossenen Adressenspeicher, und

Fig. 2 eine Station, bei der der Adressenspeicher ein RAM einer Mikroprozessor-Anordnung ist.

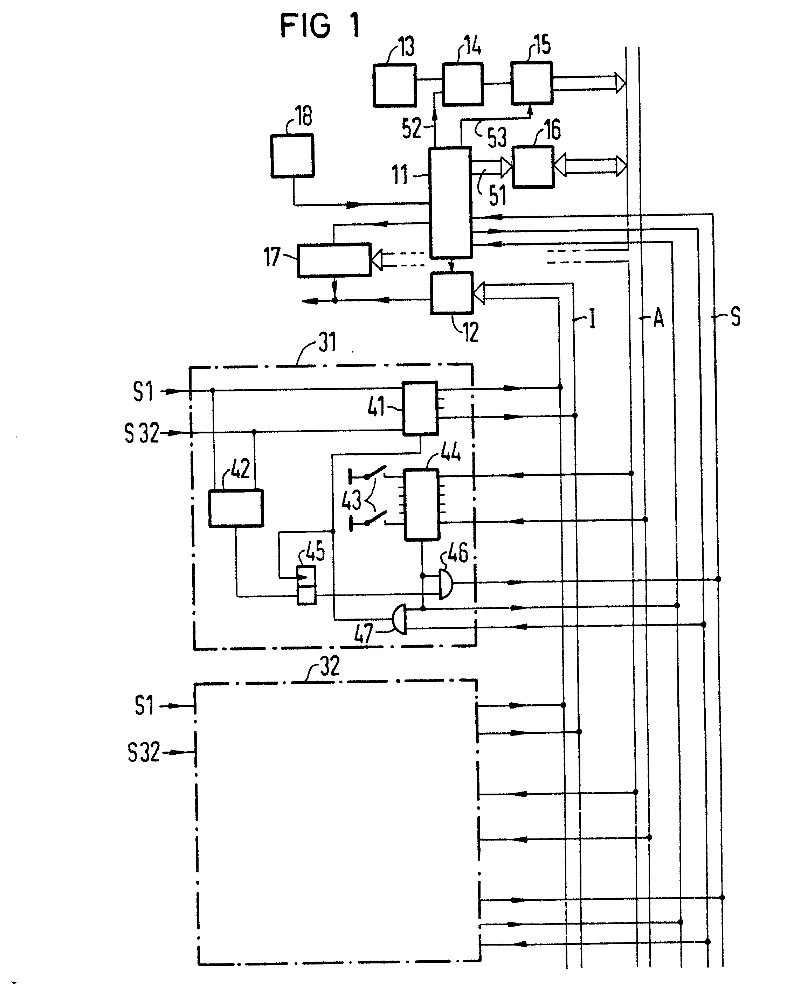

Fig. 1 zeigt eine Station einer Signalübertragungseinrichtung zur Übermittlung von Informationen an eine Zentralstation. Die Station enthält mehrere als Signaleingabe-Baueinheiten ausgebildete Eingabeeinrichtungen mit je einer eigenen Adresse. Die Anzahl der Signaleingänge der Station kann durch Bestücken mit weiteren Eingabeeinrichtungen 31, 32, . . . erweitert werden, die je 32 Signaleingänge haben. Jeweils 32 Signaleingängen ist eine eigene Telegrammadresse zugeordnet.

Die Station nach Fig. 1 enthält den Adressenspeicher 17, in den sich die Adressen der in der Station tatsächlich vorhandenen Eingabeeinrichtungen einschreiben lassen. Um die betreffenden Adressen zu ermitteln, legt der taktsteuerbare Binärzähler 15, der über das Tor 14 an den Taktgeber 13 angeschlossen ist, eine Folge sämtlicher in der Signalübertragungseinrichtung möglicher Adressen an den Adressenbus A, sobald die Einrichtung 11 zur Ablaufsteuerung über die Steuerleitung 52 die Torschaltung 14 freigibt und über die Steuerleitung 53 an den Enable-Eingang des Zählers 15 ein entsprechendes Potential anlegt.

Die Adressenvergleicher 44 der Eingabeeinrichtungen 31, 32, . . . vergleichen die empfangene Adresse mit der eigenen und geben im Falle der Übereinstimmung an den Steuerbus S ein Signal »Adresse richtig« ab. Dieses Signal wird der Einrichtung 11 zur Ablaufsteuerung zugeführt und veranlaßt diese, über die an den Enable-Eingang des Adressenspeichers geführte Steuerleitung 55 den Adressenspeicher, die betreffende Adresse einzuschreiben. Ist eine vom Zähler 15 ausgesandte Adresse nicht vorhanden, so wird diese bei der betrachteten Abfrage nicht weiter verwertet. Am Ende des Abfragezyklus stehen die Adressen der vorhandenen Sendeeinrichtungen im Adressenspeicher 16 für eine gezielte Abfrage der Eingabeeinrichtungen zur Verfügung.

Die Signalübertragungseinrichtung ist für Aufruf- und Anreizbetrieb ausgebildet. Jeder Station der Signalübertragungseinrichtung ist für den Anreizbetrieb eine andere Staffelzeit zugeteilt. Nach Ablauf der der Station zugeteilten Staffelzeit werden in einem sogenannten Anreizzyklus, der zwischen zwei Zentralentelegrammen liegt, alle in der Station tatsächlich vorhandenen Eingabeeinrichtungen auf Vorhandensein eines Anreizes abgefragt. Entsprechend der Anzahl der vorliegenden Anreize sendet die Station ein Telegramm oder eine Folge von zeitlich gestaffelten Telegrammen aus.

Die in Fig. 1 gezeigte Station enthält einen zentralen Teil, der die Einrichtung 11 zur Ablaufsteuerung, den Multiplexer 12, den Binärzähler 15 mit Taktgeber 13 und Torschaltung 14 und den Adressenspeicher 16 enthält und mehrere daran angeschlossene Eingabeeinrichtungen 31, 32, . . ., von denen in der Figur lediglich eine erste Eingabeeinrichtung 31 näher dargestellt ist.

In gleicher Weise sind, wie anhand der zweiten Eingabeeinrichtung 32 angedeutet ist, weitere Eingabeeinrichtungen an den Adressenbus A, den Informationsbus I und den Steuerbus S angeschlossen.

Der Adressenbus A besteht im dargestellten Beispiel aus sechs Leitungen, die an den als Adressengeber dienenden Binärzähler 15 und an den Adressenspeicher 16 angeschlossen sind. Am 6 Bit-Ausgang des Binärzählers 15 erscheinen während des Suchlaufes die Adressen der Eingabeeinrichtungen 31, 32, . . . als eine mittels der Torschaltung 14 zeitweise anhaltbare zyklische Folge von 6-Bit-Parallelinformationen.

An den Adressenbus A sind die Adressenvergleicher 44 der Eingabeeinrichtungen 31, 32, . . . angeschlossen. Der andere Eingang der Adressenvergleicher 44 ist jeweils mit einem sechspoligen Codierschalter 43 verbunden, mit dessen Hilfe sich 64 Telegrammadressen einstellen lassen. Mit Hilfe des Codierschalters 43 wird jede der Eingabeeinrichtungen 31, 32, . . . auf eine eigene Adresse eingestellt.

Bei Übereinstimmung der Eingabeeinrichtung-Adresse und der vom Binärzähler 15 abgegebenen Adresse gibt der in der Eingabeeinrichtung 31, 32, . . . enthaltene Adressenvergleicher 44 am Ausgang ein Kriterium »Adresse richtig« an den Steuerbus S und an je einen Eingang der UND-Glieder 46 und 47 ab. Die Einrichtung 11 gibt über den Steuerbus 51 an den Adressenspeicher 16 ein Steuersignal zum Einschreiben der am Adressenbus A liegenden Adresse.

Ändert sich der Meldezustand bei einer oder mehreren der Signalquellen S1 . . . S32, so stellt dies der Anreizimpulsgeber 42 fest und setzt den Anreizspeicher 45. Der Anreizspeicher 45 bereitet das UND-Glied 46 vor, das, sobald der Adressenvergleicher 44 Adressengleichheit feststellt, über den Steuerbus S einen Anreiz an die Einrichtung 11 zur Ablaufsteuerung abgibt.

Der staffelzeitgesteuerte Signalgeber 18 gibt zu gegebener Zeit ein Kriterium »Sendeberechtigung« an die Einrichtung 11 ab.

Ist für die in Fig. 1 gezeigte Station der Zeitpunkt der Sendeberechtigung gekommen, so löst das vom Signalgeber 18 kommende Kriterium »Sendeerlaubnis« einen Suchvorgang aus, mit dessen Hilfe festgestellt wird, ob in einer der in der Station enthaltenen Eingabeeinrichtungen ein Anreiz vorliegt. Zu diesem Zweck werden, von der Einrichtung 11 über der Steuerbus 51 gesteuert, vom Adressenspeicher 16 nacheinander gezielt die Adressen der Eingabeeinrichtungen 31, 32, . . . an den Adressenbus A gelegt.

Der Adressenspeicher 16 wird dabei solange weitergeschaltet, bis an seinem Ausgang die Adresse einer Eingabeeinrichtung 31, 32, . . . erscheint, bei der ein Anreiz vorliegt. In diesem Fall gelangt ein Kriterium »Anreiz« über den Steuerbus S an die Einrichtung 11 und sperrt das Auslesen des Adressenspeichers 16.

Die Einrichtung 11 gibt ein Kriterium »Station sendet« sowohl an den Multiplexer 12 und die Einrichtung 17 als auch an das UND-Glied 47 der Eingabeeinrichtung 31 ab. Über das UND-Glied 47 wird der Multiplexer 41 aktiviert. Die Station sendet nun mittels der Einrichtung 17, die insbesondere ein Adressenregister ist, die am Adressenbus A liegende Adresse seriell und daran anschließend die Informationen der Signalquellen S1 . . . S32 derjenigen Eingabeeinrichtung aus, deren Adresse im Adressenspeicher 16 eingestellt ist.

Der Multiplexer 41 reduziert die Zahl der parallelen Signalleitungen von 32 auf vier. Der über den Informationsbus I daran angeschlossene Multiplexer 12 bewirkt eine weitere Reduzierung von vier Leitungen auf eine einzige und gibt an seinem Ausgang die Meldungen als Serieninformation an die Übertragungsleitung ab. Abweichend von Fig. 1 können nur in den Eingabeeinrichtungen oder nur in der Ablaufsteuereinrichtung Multiplexer vorgesehen werden.

Sobald die Information der an die Eingabeeinrichtung 31 angeschlossenen Signalquellen S1 . . . S32 verarbeitet sind, wird in der Einrichtung 11 ein Kriterium »Telegrammende« gebildet. Das Kriterium »Station sendet« verschwindet daher und der Anreizspeicher 45 wird über das UND-Glied 47 zurückgesetzt.

Daraus folgt, daß am Ausgang des UND-Gliedes 46 das Kriterium »Anreiz« verschwindet und die Einrichtung 11 den Adressenspeicher 16 weiter ausliest.

Der beschriebene Funktionsablauf wiederholt sich solange, bis die Informationen der Eingabeeinrichtungen verarbeitet sind, die ein Kriterium »Anreiz« aufweisen.

Beim Aufrufbetrieb empfängt, was in Fig. 1 nicht dargestellt ist, die Station zeichenweise die Adressen und legt sie auf den Adressenbus A.

Wird in einer der Eingabeeinrichtungen der Station Adressengleichheit festgestellt, so wird über eine in der Figur nicht dargestellte Sammelleitung ein Signal »Adresse richtig« an die Einrichtung 11 gegeben. In diesem Fall sendet die Station unmittelbar im Anschluß an ein Aufruftelegramm ein Antworttelegramm.

Springt eine Fernwirkstation mit einem Anreiztelegramm ein, so unterbrechen der Wartezeitzähler in der Zentrale und die Staffelzeitzähler in den Fernwirkstationen die Zählung für die Zeit der Telegramme. Nach Ablauf der Wartezeit folgt ein neuer Abfrageblock usw.

Die minimale Länge der Staffelzeitstufen ist durch die maximale Laufzeit im Übertragungskanal festgelegt. Selbst bei ungünstigen Toleranzen ist unter allen Umständen sichergestellt, daß ein Anreiztelegramm einer entfernten Station immer früher am Ort einer anderen Station eintrifft als deren Staffelzeitzähler die Einspringberechtigung freigibt.

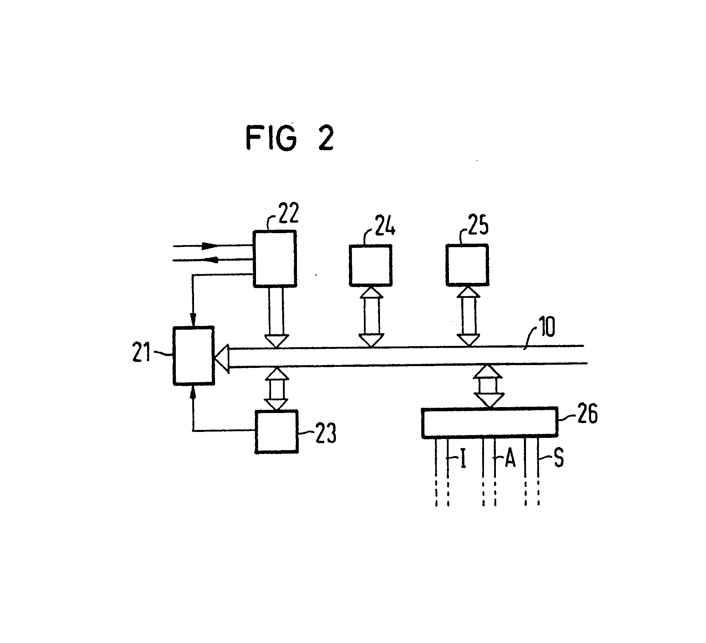

Fig. 2 zeigt ein Ausführungsbeispiel für eine Anordnung, die den zentralen Teil der in Fig. 1 gezeigten Station ersetzen kann. Dabei dient als Einrichtung zur Ablaufsteuerung eine Mikroprozessoranordnung. Diese enthält den Mikroprozessor 21, z. B. vom Typ SAB 8085, der über den Mikroprozessorbus 10 mit dem Timer-Baustein 23, z. B. vom Typ SAB 8253, dem Peripherie-Baustein 22, z. B. vom Typ SAB 8251, dem RAM 24 und dem ROM 25, z. B. vom Typ SAB 8111 bzw. 2114, sowie dem weiteren Peripherie-Baustein 26, z. B. vom Typ SAB 8255, verbunden ist.

Der Peripheriebaustein 22 ist ein sogenannter USART und dient zur Aussendung und zum Empfang von Fernwirktelegrammen. Mit Hilfe des Peripherie-Bausteines 26 wird der Informationsbus I, der Adressenbus A und der Steuerbus S an den Mikroprozessorbus 10 angeschlossen.

Der Mikroprozessor 21 legt im Arbeitsspeicher 24, gebildet durch einen Teil des RAM, eine Datei an, in die er nur die in der Station enthaltenen Adressen abspeichert und auf Anreiz abfragt. Diese Datei hält er durch zyklisches Abfragen aller möglichen Adressen auf dem neuesten Stand, wenn er nicht durch andere Arbeiten beansprucht wird.

Da im allgemeinen jede Station nur mit einem geringen Teil der möglichen Adressen bestückt ist, ergibt sich durch dieses Verfahren eine bedeutende Zeitersparnis und damit keine nennenswerte Verzögerung beim Aussenden der Telegramme. In vorteilhafter Weise hat der Prozessor auch bei höheren Übertragungsgeschwindigkeiten, z. B. bis 9,6 kBit/s genügend Zeit, alle Adressen abzufragen, da er den Zeitpunkt in geeigneter Weise wählen kann.

Die Prozessoranordnung nach Fig. 2 legt immer dann, wenn sie nicht mit spontanen Abläufen wie Daten verarbeiten, senden oder empfangen beschäftigt ist, nacheinander alle im Fernwirknetz möglichen Adressen über den Peripherie-Baustein 26 an den Adressenbus A. Sobald durch ein Signal auf dem Steuerbus S das Vorhandensein einer Eingabeeinrichtung mit der gerade angelegten Adresse signalisiert wird, wird diese Adresse in einem Arbeitsspeicher 24 abgelegt. Sodann wird die nächste Adresse an den Adressenbus A angelegt. Sind alle möglichen Adressen abgefragt worden, schreibt der Prozessor 21 in den Arbeitsspeicher 24 ein Endekriterium ein. Der Vorgang beginnt dann von Neuem, so daß sich im Arbeitsspeicher immer der aktuelle Adressenbelegungsstand befindet.

Hat der Timer 23 die eingestellte Staffelzeit abgezählt, hat die Station die Möglichkeit, Telegramme auszusenden und der Prozessor 21 legt nur noch die im Arbeitsspeicher befindlichen Adressen nacheinander an den Adressenbus A und fragt damit die vorhandenen Eingabeeinrichtungen auf eine Meldungsänderung ab. Dies bedeutet gegenüber dem Abfragen aller möglichen Adressen eine erhebliche Zeitersparnis, so daß zwischen den einzelnen Telegrammen keine Lücken entstehen.

## Patentansprüche

1. Signalübertragungseinrichtung, bei der wenigstens eine Zentralstation und weitere Stationen, die mit Eingabeeinrichtungen (31, 32) wahlweise bestückbar sind, an einen gemeinsamen Signalübertragungsweg anschließbar sind, wobei die Eingabeeinrichtungen durch die Zentralstation einzeln aufrufbar sind und nach Aufruf durch die Zentralstation oder durch einen Anreiz gesteuert Signale aussenden und in der Aufruffolge Zeitabschnitte freigehalten sind, in die die Stationen im Anreizbetrieb von sich aus einspringen können, wobei in den Stationen jeweils wenigstens einer Gruppe von Eingabeeinrichtungen eine gemeinsame, mittels einer Zeitsteuereinrichtung (18, 23) feststellbare Einspringberechtigungszeit zugeteilt ist, und die Zeitsteuereinrichtung (18, 23) im Falle wenigstens eines in der betreffenden Station vorliegenden Anreizes jeweils zum Zeitpunkt der Einspringberechtigungszeit eine Ablaufsteuereinrichtung (11) zu einer zeitlich aufeinanderfolgenden Abfrage der in der betreffenden Station enthaltenen Eingabeeinrichtungen (31, 32) veranlaßt, dadurch gekennzeichnet, daß die Ablaufsteuereinrichtung (11) eine Adressenabfrageeinrichtung mit einem Adressengeber (15) für alle in der Signalübertragungseinrichtung vorgesehenen Adressen enthält und daß mittels der Adressenabfrageeinrichtung die Eingabeeinrichtungen (31, 32) derart abfragbar sind, daß als Abfrageergebnis die Adressen der in der betreffenden Station vorhandenen Eingabeeinrichtungen (31, 32) in einen Adressenspeicher (16) einschreibbar sind und daß bei einer anreizbedingten Sendung der betreffenden Station die im Adressenspeicher (16) gespeicherten Adressen ausgelesen und nur diese Adressen zur Abfrage der Eingabeeinrichtungen (31, 32) herangezogen werden (Fig. 1).

2. Signalübertragungseinrichtung nach Anspruch 1, dadurch gekennzeichnet, daß mittels der Adressenabfrageeinrichtung in zeitlicher Folge eine wiederholte Abfrage der Eingabeeinrichtungen (31, 32) vornehmbar ist, derart, daß in den Arbeitsspeicher (24) jeweils das letzte Abfrageergebnis einschreibbar ist (Fig. 2).

**Claims**

1. A signal transmission device wherein at least one central station and further stations which can be selectively equipped with input devices (31, 32) can be connected to a common signal transmission path, where the input devices can be individually called up by the central station and having been called up by the central station or under the control of an impulse transmit signals, and in the call-up sequence time sections are kept free which the stations can independently enter during the impulse operation, where, in the stations, at least one group of input devices is assigned a common entry entitlement time determinable by a time control device (18, 23), and in the event that at least one impulse is present in the station in question at the instant of the entry entitlement time the time control device (18, 23) causes a flow control device (11) consecutively to interrogate the input devices (31, 32) included in the station in question, characterised in that the flow control device (11) includes an address interrogation device with an address generator (15) for all the addresses provided in the signal transmission device, and that the input devices (31, 32) can be interrogated by means of the address interrogation device in such manner that by way of interrogation result the addresses of the input devices (31, 32) present in the station in question can be input into an address store (16), and that in the case of an impulse-motivated transmission on the part of the station in question, the addresses stored in the address store (16) are read out and only these addresses are used to interrogate the input devices (31, 32) (fig. 1).

2. A signal transmission device as claimed in claim 1, characterised in that in succession the address interrogation device can repeatedly interrogate the input devices (31, 32) in such manner that the last interrogation result can be input into the working store (24) (fig. 2).

**Revendications**

1. Dispositif de transmission de signaux, dans lequel au moins un poste central et d'autres postes, qui peuvent être équipés au choix avec des dispositifs d'entrée (31, 32), peuvent être raccordés à une voie commune de transmission de signaux, et dans lequel les dispositifs d'entrée peuvent être interrogés individuellement par le poste central et peuvent émettre des signaux après l'appel par le poste central ou bien sur commande déclenchée par une excitation, alors que des créneaux temporels, pendant lesquels les postes peuvent passer d'eux même en fonctionnement avec excitation, sont maintenus libres dans la suite des appels, dans lequel, dans les postes appartenant respectivement à au moins un groupe de dispositifs d'entrée, se trouve affectée une durée commune d'autorisation d'intervention pouvant être déterminée au moyen d'un dispositif de commande du temps (18, 23), et dans lequel, dans le cas d'au moins une excitation présente dans le poste considéré, et à l'instant d'autorisation d'intervention, le dispositif de commande du temps (18, 23) commande un dispositif (11) de commande séquentielle pour l'interrogation succesive dans le temps des dispositifs d'entrée (31, 32) contenus dans le poste considéré, caractérisé par le fait qu'au dispositif de commande séquentielle est associé un dispositif d'interrogation d'adresses comportant un générateur d'adresses (15) pour toutes les adresses prévues dans le dispositif de transmission de signaux, et que les dispositifs d'entrée (31, 32) peuvent être interrogés au moyen du dispositif d'interrogation d'adresses de telle sorte que, en tant que résultat d'interrogation, les adresses des dispositifs d'entrée (31, 32) présents dans le poste considéré peuvent être enregistrées dans une mémoire d'adresses (16) et que dans le cas d'une émission, provoquée par une excitation, du poste concerné, les adresses mémorisées dans la mémoire d'adresses (16) sont lues et seules ces adresses sont utilisées pour l'interrogation des dispositifs d'entrée (31, 32) (fig. 1).

2. Dispositif de transmission de signaux suivant la revendication 1, caractérisé par le fait qu'à l'aide du dispositif d'interrogation d'adresses on peut réaliser, successivement dans le temps, une interrogation réitérée des dispositifs d'entrée (31, 32), de telle sorte que le dernier résultat d'interrogation peut être enregistré dans la mémoire de travail (24) (fig. 2).

## FIG 1

# FIG 2